# EUROPÄISCHE PATENTSCHRIFT

(11) **EP 0 765 538 B1**
(45) Veröffentlichungstag und Bekanntmachung des Hinweises auf die Patenterteilung: **10.06.1998**
(21) Anmeldenummer: 95917225.5
(22) Anmeldetag: 04.05.1995
(51) Int. Cl.: H02G 15/013, H02G 15/113

(54) **KABELMUFFE**
CABLE COUPLING BOX
BOITE DE JONCTION

(30) Priorität: 13.06.1994 AT 11729/49
(43) Veröffentlichungstag der Anmeldung: 02.04.1997
(73) Patentinhaber: FELTEN & GUILLEAUME AUSTRIA AG, 3943 Schrems-Eugenia 1 (AT)
(72) Erfinder: BOGG, Walter, A-3841 Kottschallings (AT)
(74) Vertreter: Hehenberger, Reinhard, Dipl.-Ing.
(86) Internationale Anmeldenummer: AT9500087
(87) Internationale Veröffentlichungsnummer: WO9534929

(56) Entgegenhaltungen:
- EP-A- 0 531 276
- DE-A- 2 249 368
- FR-A- 2 090 148
- FR-A- 2 668 021
- US-A- 3 796 823

## Beschreibung

Die Erfindung betrifft eine Kabelmuffe für die Aufnahme von Spleißen von Kabeln, insbesondere von nachrichtentechnischen Kabeln oder von elektrischen Leitungen, bestehend aus zwei Halbschalen, wobei an den Stirnflächen der Muffe je wenigstens eine Durchtrittsöffnung für Kabel vorgesehen ist, mit zwischen den Halbschalen angeordneten Dichtungen, deren Enden im Bereich der Durchtrittsöffnungen für Kabel liegen, welche Dichtungen in Nuten in den einander zugekehrten Rändern der Halbschalen eingesetzt sind, und mit Dichtringen aus elastischem Werkstoff, die in den Durchtrittsöffnungen für Kabel angeordnet sind.

Bei der aus der EP 531 276 A bekannten Muffe sind im Bereich der Durchtrittsöffnungen für Kabel an den Stirnflächen außen anliegende Dichtringe vorgesehen, welche von den Kabeleinführungsstutzen gegen die im Bereich der Stirnflächen liegenden, verdickten Enden der Dichtungen, die zwischen den Halbschalen der bekannten Kabelmuffe vorgesehen sind, gepreßt werden.

Bei der aus der EP 531 276 A bekannten Kabelmuffe ist das Abdichten der Durchtrittsöffnungen für Kabel mit Hilfe der von außen an die Stirnflächen der Kabelmuffe anliegenden Dichtringe zufriedenstellend gelöst. Das Herstellen der Dichtung erfordert aber eine gesteigerte Aufmerksamkeit, da die Stirnflächen und insbesondere die Enden der längslaufenden Dichtungen frei von Verschmutzungen gehalten werden müssen. Überdies ist das Ansetzen der Ringe nicht immer einfach, da diese gehalten werden müssen bis die Kabeleinführungsstutzen festgeschraubt worden sind.

Die aus der CH 566 658 A oder der DE 20 50 536 A bekannten Dichtungen gewährleisten zwar eine gute Abdichtung, das Handhaben der aus den genannten Schriften bekannten Dichtungen ist jedoch aufwendig. Auch das Einsetzen dieser Dichtungen in die Halbschalen der bekannten Kabelmuffen ist nicht immer einfach.

Eine Kabelmuffe mit den Merkmalen des einleitenden Teils des unabhängigen Anspruches 1 ist aus der US 3 796 823 A bekannt. Bei dieser Kabelmuffe werden die in den Durchtrittsöffnungen eingesetzten Dichtringe radial belastet, so daß sie im Bereich der Durchtrittsöffnungen an die glatten Enden der zwischen den Halbschalen angeordneten, schnurartigen Dichtungen gedrückt werden.

Der Erfindung liegt die Aufgabe zugrunde eine einfach herstellbare und einfach aufgebaute Dichtung für Kabelmuffen zur Verfügung zu stellen.

Erfindungsgemäß wird diese Aufgabe im wesentlichen dadurch gelöst, daß die im Bereich der Durchtrittsöffnungen liegenden Enden der Dichtungen gewinkelte Endflächen aufweisen, die mit der an ihrem inneren Ende gestuften Innenfläche der Durchtrittsöffnungen fluchtend ausgerichtet sind, daß die Dichtringe eine gestufte Außenkontur mit Stufen aufweisen, daß ein Druckteil vorgesehen ist, mit dem der Dichtring diesen elastischen verformend in Richtung der Achse der Durchtrittsöffnung belastet werden kann, und daß eine der Stufen der Stufe in der Durchtrittsöffnung und den gewinkelten Endflächen der Dichtungen und die andere Stufe dem in die Durchtrittsöffnung eingreifenden Teil des Druckteils zugeordnet ist.

Bevorzugte und vorteilhafte Ausgestaltungen der erfindungsgemäßen Kabelmuffe sind Gegenstand der Unteransprüche.

Bei der erfindungsgemäßen Dichtung werden die an sich gegebenen Vorteile der Dichtung gemäß der EP 531 276 A beibehalten, wobei jedoch das Herstellen der Dichtung vereinfacht ist. Auch besteht kaum Gefahr, daß die Enden der Dichtungen verschmutzt werden, da diese durch die Anordnung im Inneren der Durch; trittsöffnungen für das Kabel vor Verschmutzung gut geschützt sind.

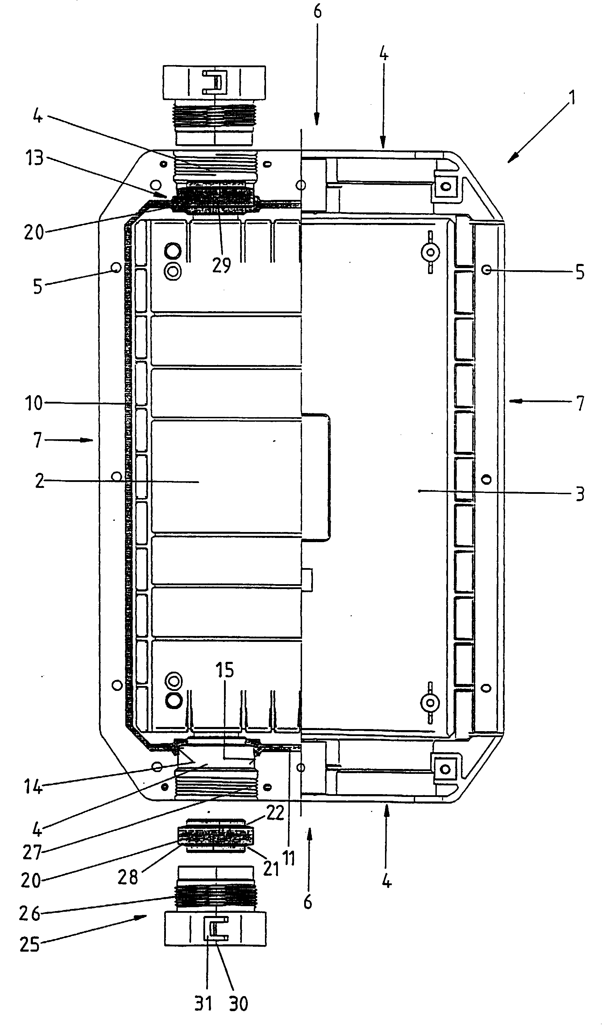

Weitere Vorteile der Erfindung ergeben sich aus der nachstehenden Beschreibung des in der Zeichnung gezeigten Ausführungsbeispiels einer erfindungsgemäßen Kabelmuffe, in der diese in Draufsicht mit teilweise weggebrochener, oberer Halbschale gezeigt ist.

Im gezeigten Ausführungsbeispiel der Kabelmuffe 1 der Erfindung besteht diese aus einer Halbschale 2 und einer zweiten, vorzugsweise identisch ausgebildeten Halbschale 3. Die beiden Halbschalen 2 und 3 werden entlang ihrer Ränder mit Hilfe von durch Löcher 5 gesteckten Schrauben miteinander verbunden.

Die Kabelmuffe 1 besitzt im gezeigten Ausführungsbeispiel an ihren Schmalseiten 6 je zwei Durchtrittsöffnungen 4 für Kabel, die gemeinsam von den Halbschalen 2 und 3 begrenzt werden.

Um die Kabelmuffe 1 abzudichten, sind Dichtungen 10 und 11 vorgesehen, die in Nuten, die im Bereich der Schmalseiten 6 und der Langseiten 7 der Kabelmuffe 1 vorgesehen sind, eingesetzt sind. Im einzelnen sind im gezeigten Ausführungsbeispiel im Bereich der Langseiten 7 Dichtungen 10 und im Bereich der Schmalseiten 6 Dichtungen 11 vorgesehen. Die Enden 13 der Dichtungen 10 und 11 liegen im Bereich der Durchtrittsöffnungen 4 der Kabelmuffe 1 frei. Dabei sind die Enden 13 der Dichtungen 10 und 11 in Draufsicht (Blickrichtung der Zeichnung) gewinkelt ausgebildet, wobei die in die Durchtrittsöffnung 4 weisende Endfläche 14 der Dichtungen 10 und 11 eine der Kontur der Durchtrittsöffnung 4 angepaßte Formgebung hat und diese ergänzt, so daß die Flächen 14 mit der Innenfläche 15 der Durchtrittsöffnung fluchten.

Es ist darauf hinzuweisen, daß bei einer Kabelmuffe mit nur je einer Durchtrittsöffnung 4 an den Schmalseiten die Dichtungen 11 entfallen und dann nur zwei Dichtungen 10 vorgesehen sind. Sinngemäß sind bei mehr als zwei Durchtrittsöffnungen 4 an dem einen und/oder dem anderen Ende der Kabelmuffe 1 mehrere Dichtungen 11 vorgesehen. Es versteht sich, daß die Erfindung auch auf eine Kabelmuffe anwendbar ist, bei der die Anzahl der Durchtrittsöffnungen 4 an den Schmalseiten 6 unterschiedlich ist (beispielsweise eine Durchtrittsöffnung 4 an einer Schmalseite 6 und zwei Durchtrittsöffnungen 4 an der anderen Schmalseite 6).

Die Querschnittsform der Dichtungen 10 und 11 ist beliebig und kann rechteckförmig, quadratisch, rechteckförmig mit abgerundeten Ecken, elliptisch oder kreisrund sein, es ist aber auch die Querschnittsform denkbar, die für die Dichtungen der EP-A 531 276 vorgeschlagen wird und die eine eine von gekrümmten Linien umgrenzte, sternförmige Querschnittsform ist.

In die Durchtrittsöffnung 4 für Kabel wird jeweils ein Dichtring 20 aus elastisch verformbarem Werkstoff (z.B. ein gummielastischer Kunststoff) eingesetzt. Der Dichtring 20 hat eine gestufte Außenkontur, wobei er mit der dem Inneren der Kabelmuffe 1 zugekehrten Stufe 22 an den gewinkelten Endflächen 14 der Dichtungen 10 und 11 anliegt. Mit einer in der Gebrauchslage nach außen weisenden Stufe 21 greift der Dichtring 20 in einen Druckteil 25 ein. Der Druckteil 25 ist im gezeigten Ausführungsbeispiel mit einem Außengewinde 26 ausgestattet, so daß er in ein entsprechendes Innengewinde 27 der Durchtrittsöffnung 4 eingeschraubt werden kann. Der Druckteil 25 drückt beim Einschrauben in die Durchtrittsöffnung 4 gegen die Fläche 28 des Dichtringes 20, so daß dieser elastisch verformt wird und sich mit seiner Innenfläche dichtend an die Außenfläche eines durch den Druckteil 25 und den Dichtring 20 gestecktes Kabel anlegt. Weiters legt sich der Dichtring 20 mit seiner Außenfläche dichtend an die Innenfläche 15 der Durchtrittsöffnung 4 und die Endflächen 14 der Enden 13 der Dichtungen 10 und 11 an.

Sowohl der Dichtring 20 als auch der Druckteil 25 können zur erleichterten Montage an einem Kabel wenigstens einfach geschlitzt sein. Dabei kann der Schlitz des Dichtringes 20, wie im Ausführungsbeispiel gezeigt, gestuft ausgebildet sein, um eine sichere Dichtung auch im Bereich des Schlitzes zu gewährleisten.

Dem Schlitz 30 im Druckteil 25 kann ein Scharnier (nicht gezeigt) gegenüberliegen, so daß der Druckteil 25 auf- und zugeklappt werden kann. Die in der Zeichnung gezeigte geschlossene Lage kann durch eine Verbindungsvorrichtung 31 gesichert werden.

Alternativ zu der Verbindungsvorrichtung 31 kann der Druckteil 25 auch mit Hilfe von Schrauben in seiner geschlossenen Stellung gehalten werden. Es ist auch eine Ausführungsform denkbar, in welcher der Druckteil 25 in zwei Halbringe geteilt ist und durch zwei einander diametral gegenüberliegende Schrauben zusammengehalten wird, nachdem er auf ein Kabel aufgesetzt worden ist.

Es ist auch eine Ausführungsform des Druckteils 25 denkbar, die eine glatte Wand (ohne Gewinde 26) aufweist, die gleitend in die Durchtrittsöffnung 4 (ohne Gewinde 27 an der Innenfläche 15) eingreift. Ein derartiger Druckteil 25 kann mit Hilfe von in Gewindebohrungen in der Schmalseite 6 der Kabelmuffe 1 eingedrehte Schrauben auf den Dichtring 20 hin belastet werden.

Anstelle des beschriebenen Dichtringes 20 können auch Dichtringe in Form eines ringförmigen Teils mit gestanzten Ringen zur Durchmesseranpassung, also mehrteilige Dichtringe, verwendet werden. In einer anderen Ausführungsform werden um das einzuführende Kabel herum Bänder mit verschiedener Breite und Stärken gelegt, die dann die Funktion des Dichtringes 20 übernehmen.

Um nicht für das Einführen und Herausführen von Kabeln benötigte Durchtrittsöffnungen 4 zu verschließen, sind Verschlußteile vorgesehen, die im Prinzip den Dichtringen 20 entsprechen, jedoch keine Durchgangsöffnung aufweisen. Diese Verschlußteile werden in die nicht benötigten Durchtrittsöffnungen 4 eingesetzt und mit Hilfe des Druckteils 25 elastisch verformt, so daß sie sich mit ihrer Außenfläche dichtend an die Endflächen 14 der Dichtungen 10, 11 und die Innenfläche 15 der Durchtrittsöffnung 4 anlegen.

Zusammenfassend kann die Erfindung beispielsweise wie folgt dargestellt werden:

Eine Kabelmuffe 1 bestehend aus zwei Halbschalen 2 und 3 wird durch Dichtungen 10, 11 im Bereich ihres Umfanges abgedichtet. Die Dichtungen 10, 11 enden im Bereich von in der Kabelmuffe 1 vorgesehenen Durchtrittsöffnungen 4 für Kabel, die zu einem Spleiß, der im Inneren der Muffe 1 aufgenommen ist, führen.

Um die Gehäusehälften 2 und 3 gegeneinander abzudichten, werden diese miteinander durch Schrauben verbunden, so daß die in Nuten aufgenommenen Dichtungen 10 und 11 die Muffe 1 in ihrem Umfangsbereich abdichten. In die Durchtrittsöffnungen 4 sind Dichtringe 20 eingesetzt, welche mit ihrer Außenfläche an Endflächen 14 an den Enden 13 der Dichtungen 10, 11 anliegen. Die Innenfläche der Dichtringe 20 liegt am Außenumfang des eingeführten Kabels an. Weiters sind in die Durchgangsbohrungen 4 einschraubbare Druckteile 25 vorgesehen, durch die der Dichtring 20 elastisch verformt wird, so daß er sich mit seiner Außenfläche an die Innenfläche 15 der Durchtrittsöffnung 4 einschließlich der Endflächen 14 der Dichtungen 10, 11 anlegt und seine Innenfläche gegen den Außenumfang des Kabels gepreßt wird.

## Patentansprüche

1. Kabelmuffe (1) für die Aufnahme von Spleißen von Kabeln, insbesondere von nachrichtentechnischen Kabeln oder von elektrischen Leitungen, bestehend aus zwei Halbschalen (2, 3), wobei an den Stirnflächen der Muffe (1) je wenigstens eine Durchtrittsöffnung (4) für Kabel vorgesehen ist, mit zwischen den Halbschalen (2, 3) angeordneten Dichtungen (10, 11), deren Enden (13) im Bereich der Durchtrittsöffnungen (4) für Kabel liegen, welche Dichtungen (10, 11) in Nuten in den einander zugekehrten Rändern der Halbschalen (2, 3) eingesetzt sind, und mit Dichtringen (20) aus elastischem Werkstoff, die in den Durchtrittsöffnungen (4) für Kabel angeordnet sind, dadurch gekennzeichnet, daß die im Bereich der Durchtrittsöffnungen (4) liegenden Enden (13) der Dichtungen (10, 11) gewinkelte Endflächen (14) aufweisen, die mit der an ihrem inneren Ende gestuften Innenfläche (15) der Durchtrittsöffnungen (4) fluchtend ausgerichtet sind, daß die Dichtringe (20) eine gestufte Außenkontur mit Stufen (21, 22) aufweisen, daß ein Druckteil (25) vorgesehen ist, mit dem der Dichtring (20) diesen elastischen verformend in Richtung der Achse der Durchtrittsöffnung (4) belastet werden kann, und daß eine der Stufen (22) der Stufe in der Durchtrittsöffnung (4) und den gewinkelten Endflächen (14) der Dichtungen (10, 11) und die andere Stufe (21) dem in die Durchtrittsöffnung (4) eingreifenden Teil des Druckteils (25) zugeordnet ist.

2. Kabelmuffe nach Anspruch 1, dadurch gekennzeichnet, daß der Dichtring (20) wenigstens an einer Stelle geschlitzt ist.

3. Kabelmuffe nach Anspruch 2, dadurch gekennzeichnet, daß der Schlitz (29) im Dichtring (20) wenigstens zweimal abgewinkelt ist.

4. Kabelmuffe nach einem der Ansprüche 1 bis 3, dadurch gekennzeichnet, daß der Dichtring abtrennbare Ringe besitzt, die an den jeweiligen Kabeldurchmesser angepaßt werden können.

5. Kabelmuffe nach Anspruch 1, dadurch gekennzeichnet, daß der Dichtring dadurch gebildet ist, daß um das einzuführende Kabel Bänder unterschiedlicher Breite und/oder Stärke gelegt sind.

6. Kabelmuffe nach einem der Ansprüche 1 bis 5, dadurch gekennzeichnet, daß der Druckteil (25) in die Durchtrittsöffnung (4) einschraubbar ist.

7. Kabelmuffe nach einem der Ansprüche 1 bis 5, dadurch gekennzeichnet, daß der Druckteil (25) mit Hilfe von Schrauben, die in die Schmalseite (6) der Kabelmuffe (1) eingedreht sind, auf den in die Durchtrittsöffnung (4) eingesetzten Dichtring (20) hin belastet ist.

8. Kabelmuffe nach einem der Ansprüche 1 bis 7, dadurch gekennzeichnet, daß der Druckteil (25) aus zwei durch ein Scharnier miteinander verbundenen Halbringen besteht, die in ihrer aneinandergelegten Stellung durch eine Verbindungsvorrichtung (31) oder eine Schraube fixiert sind.

9. Kabelmuffe nach einem der Ansprüche 1 bis 7, dadurch gekennzeichnet, daß der Druckteil (25) aus zwei Halbringen besteht, die mit Hilfe von Schrauben aneinander festgelegt werden können.

10. Kabelmuffe nach einem der Ansprüche 1 bis 9, dadurch gekennzeichnet, daß Verschlußteile vorgesehen sind, die einem Dichtring (20) entsprechend ausgebildet sind und die in nicht für das Ein- oder Herausführen von Kabeln benötigte Durchtrittsöffnungen (4) einsetzbar und mit Hilfe eines Druckteils (25) elastisch verformbar sind, wobei die Verschlußteile scheibenförmig ausgebildet sind.

## Claims

1. Cable coupling box (1) for accommodating splices of cables, particularly of information-technology cables or of electrical conductors, comprising two half-shells, (2,3), at least one passage opening (4) for cables being provided at each end surface of the box (1), with, disposed between the half-shells (2,3), seals (10,11) whose ends (13) lie in the area of the passage openings (4) for cables, said seals (10,11) being inserted in grooves in the edges facing one another of the half-shells (2,3), and with seal rings (20) of resilient material, which are disposed in the passage openings (4) for cables, characterised in that the ends (13) of the seals (10,11) lying in the area of the passage openings (4), have angled end surfaces (14), which are aligned flush with their inner surface (15), stepped at their inner end, of the passage openings (4), in that the seal rings (20) have a stepped outer contour with steps (21, 22), in that a pressure member (25) is provided by means of which the seal ring (20) can be acted upon, deforming it elastically in the direction of the axis of the passage opening (4), and in that one of the steps (22) is allocated to the step in the passage opening (4) and to the angled end surfaces (14) of the seals (10,11), and the other step (21) is allocated to the portion of the pressure member (25) engaging in the passage opening (4).

2. Cable coupling box according to claim 1, characterised in that the seal ring (20) is slotted at at least one point.

3. Cable coupling box according to claim 2, characterised in that the slot (29) in the seal ring (20) is angled at least twice.

4. Cable coupling box according to one of claims 1 to 3, characterised in that the seal ring has separable rings, which can be adapted to the respective cable diameter.

5. Cable coupling box according to claim 1, characterised in that the seal ring is formed in such a way that strips of differing width and/or thickness are passed round the cable to be introduced.

6. Cable coupling box according to one of claims 1 to 5, characterised in that the pressure member (25) may be screwed into the passage opening (4).

7. Cable coupling box according to one of claims 1 to 5, characterised in that the pressure member (25) is stressed towards the seal ring (20) inserted into the passage opening (4) with the aid of screws which are screwed into the narrow side (6) of the cable coupling box (1).

8. Cable coupling box according to one of claims 1 to 7, characterised in that the pressure member (25) comprises two half-rings connected together by a hinge, and which in their folded-together position are fixed by a connecting device (31) or a screw.

9. Cable coupling box according to one of claims 1 to 7, characterised in that the pressure member (25) comprises two half-rings which may be secured to one another with the aid of screws.

10. Cable coupling box according to one of claims 1 to 9, characterised in that closure parts are provided which are formed to correspond with a seal ring (20), and which are insertable into passage openings (4) not required for the insertion or passage outward of cables, and which are resiliently deformable with the aid of a pressure member (25), the closure parts being disc-shaped.

## Revendications

1. Boîte de jonction (1) servant à recevoir des épissures de câbles, en particulier de câbles de télécommunication ou de lignes électriques, composée de deux demi-coquilles (1, 2), au moins une ouverture de passage (4) pour des câbles étant prévue respectivement sur les faces frontales de la boîte (1), avec des joints d'étanchéité (10, 11) qui sont disposés entre les demi-coquilles (2, 3), dont les extrémités (13) sont situées dans la zone des ouvertures de passage (4) pour les câbles et qui sont rapportées dans des rainures des bords en regard des demi-coquilles (2, 3), et avec des bagues d'étanchéité (20) en matériau élastique, disposés dans les ouvertures de passage (4) pour les câbles, caractérisée par le fait que les joints d'étanchéité (10, 11) présentent, à leurs extrémités (13) situées dans la zone des ouvertures de passage (4), des faces d'extrémité (14) coudées qui sont alignées avec la face inférieure (15) des ouvertures de passage (4), laquelle est étagée avec un gradin à son extrémité intérieure, que les bagues d'étanchéité (20) présentent un contour extérieur étagé avec des gradins (21, 22), qu'il est prévu une pièce de pression (25) à l'aide de laquelle la bague d'étanchéité (20) peut être sollicitée suivant l'axe de l'ouverture de passage (4), avec déformation élastique de ladite bague, et que l'un des gradins (22) de la bague d'étanchéité est associé au gradin de l'ouverture de passage (4) et aux faces d'extrémité (14) coudées des joints d'étanchéité (10, 11) et l'autre gradin (21) est associé à la partie de la pièce de pression (25) pénétrant dans l'ouverture de passage (4).

2. Boîte de jonction suivant la revendication 1, caractérisée par le fait que la bague d'étanchéité (20) est fendue en au moins un endroit.

3. Boîte de jonction suivant la revendication 2, caractérisée par le fait que la fente (29) de la bague d'étanchéité (20) présente au moins deux coudes.

4. Boîte de jonction suivant l'une des revendications 1 à 3, caractérisée par le fait que la bague d'étanchéité comprend des anneaux séparables qui peuvent être adaptés au diamètre respectif du câble.

5. Boîte de jonction suivant la revendication 1, caractérisée par le fait que la bague d'étanchéité est constituée par l'enroulement de rubans de largeurs et/ou d'épaisseurs différentes autour du câble à introduire.

6. Boîte de jonction suivant l'une des revendications 1 à 5, caractérisée par le fait que la pièce de pression (25) peut être vissée dans l'ouverture de passage (4).

7. Boîte de jonction suivant l'une des revendications 1 à 5, caractérisée par le fait que la pièce de pression (25) peut étre sollicitée en direction de la bague d'étanchéité (20) introduite dans l'ouverture de passage (4), à l'aide de vis engagées dans le côté étroit (6) de la boîte de jonction (1).

8. Boîte de jonction suivant l'une des revendications 1 à 7, caractérisée par le fait que la pièce de pression (25) se compose de deux demi-bagues reliées entre elles par une charnière et fixées dans leur position "fermée" par un dispositif d'assemblage (31) ou une vis.

9. Boîte de jonction suivant l'une des revendications 1 à 7, caractérisée par le fait que la pièce de pression (25) est constituée par deux demi-bagues qui peuvent être fixées l'une à l'autre à l'aide de vis.

10. Boîte de jonction suivant l'une des revendications 1 à 9, caractérisée par le fait qu'elle comprend des pièces d'obturation qui sont réalisées à la manière d'une bague d'étanchéité (20) et qui peuvent être montées dans des ouvertures de passage (4) non utilisées pour l'entrée ou la sortie de câbles et peuvent être déformées élastiquement à l'aide d'une pièce de pression (25), les pièces d'obturation étant réalisées en forme de disque.
